**Europäisches Patentamt**

**European Patent Office**

**Office européen des brevets**

(19)

(11) Veröffentlichungsnummer: **0 295 510 B1**

(12)

# EUROPÄISCHE PATENTSCHRIFT

(45) Veröffentlichungstag der Patentschrift :
**15.05.91 Patentblatt 91/20**

(51) Int. Cl.$^5$: **A01B 29/06**

(21) Anmeldenummer: **88108856.1**

(22) Anmeldetag: **03.06.88**

(54) **Bodenwalze.**

(30) Priorität: **13.06.87 DE 8708361 U**

(43) Veröffentlichungstag der Anmeldung:
**21.12.88 Patentblatt 88/51**

(45) Bekanntmachung des Hinweises auf die
Patenterteilung:
**15.05.91 Patentblatt 91/20**

(84) Benannte Vertragsstaaten:
**DE FR**

(56) Entgegenhaltungen:
**DE-A- 2 658 041**
**DE-A- 3 317 485**
**FR-A- 2 586 887**

(73) Patentinhaber: **Amazonen-Werke H. Dreyer**
**GmbH & Co. KG**
**Am Amazonenwerk 9-13**
**W-4507 Hasbergen-Gaste (DE)**

(72) Erfinder: **Schomäcker, Wilfried**
**Dr.Schier-Strasse 16e**
**W-6670 St.Ingbert (DE)**

## Beschreibung

Die Erfindung betrifft eine Bodenwalze, welche in einem Rahmen drehbar gelagert ist, gemäß des Oberbegriffes des Schutzanspruches 1.

Eine derartig ausgebildete Bodenwalze ist bereits durch die DE-PS 26 58 041 bekannt. Der sich auf der Rückseite der Bodenwalze über ihre ganze Länge erstreckende Schaber mit seinen zwei V-förmig angeordneten Stirnkanten dient als Reinigungsvorrichtung von den beim Einsatz der Walze an diese anhaftenden Bodenteile, die ein ordnungsgemäßes Arbeiten der Walze verhindern. Damit die Reinigungsvorrichtung unabhängig von den beiden möglichen Drehrichtungen der Walze funktionswirksam sein kann, ist der Schaber derart über einen Gelenkhebel an dem Tragrahmen der Bodenwalze angelenkt, daß er sich unabhängig von der jeweiligen Walzendrehrichtung von der Walzenoberfläche abheben kann, wenn beispielsweise harte Klumpen auf den Schaber auftreffen. Als Nachteil ist jedoch die aufwendige Anlenkung des ausweichbaren Schabers an dem Tragrahmen der Walze anzusehen.

Der Erfindung liegt nun die Aufgabe zugrunde, für die gattungsgemäße Bodenwalze eine einfache und funktionssichere Halterung für den Schaber zu schaffen.

Diese Aufgabe wird erfindungsgemäß dadurch gelöst, daß die Haltearme des Schabers jeweils aus zwei in ihrer Längsrichtung zueinander verschiebbaren Teilen besteht, wobei der eine Teil des Haltearmes als Bolzen und der andere Teil zumindest teilweise als Hülse ausgebildet ist, in die der Bolzen eingreift.

Infolge dieser Maßnahmen entsteht eine einfache Anlenkung des Schabers an dem Rahmen der Nachlaufwalze, der unabhängig von der Drehrichtung der Bodenwalze von dieser elastisch abhebbar und mit der Walzenoberfläche zusammenwirkt, so daß die als Schaber ausgebildete Reinigungsschiene ordnungsgemäß arbeitet und gleichzeitig ein Ausweichen der Reinigungsschiene beim Auftreffen auf harte Klumpen gewährleistet ist.

Es ist erfindungsgemäß vorgesehen, daß die Feder zwischen dem Rahmen und dem Schaber angeordnet ist. Hierdurch ist sichergestellt, daß der Schaber nach einem Auweichen immer wieder in seine richtige Ausgangslage gegenüber der Walzenoberfläche gezogen wird und die Walze ordnungsgemäß von Verunreinigungen befreit.

In einer anderen Ausführungsform ist erfindungsgemäß vorgesehen, daß der Haltearm des Schabers auf seiner dem Schaber abgewandten Seite zwei in einem Abstand zueinander angeordnete Stützlager aufweist, daß an dem Rahmen der Walze zwei Gegenstützlager angeordnet sind, auf die sich die Stützlager des jeweiligen Haltearmes des Schaber abstützen, daß zwischen den Haltearmen und/oder dem Schaber einerseits und dem Rahmen andererseits die Feder angeordnet ist, wobei die Befestigungshalterung der Feder an dem Rahmen sich in dem Bereich zwischen den beiden Stütz- und Gegenstützlagern befindet. Hierdurch wird eine weitere einfache Methode zur ausweichbaren Anlenkung des Schabers geschaffen, so daß die Bodenwalze immer in gewünschter Weise von Verunreinigungen befreit wird und der Schaber die Möglichkeit besitzt, sich unabhängig von der Drehrichtung der Walze beim Auftreffen auf beispielsweise harte Kluten vom Walzenkörper abzuheben.

Weitere Einzelheiten der Erfindung sind den übrigen Unteransprüchen, der Beispielsbeschreibung und den Zeichnungen zu entnehmen. Hierbei zeigen

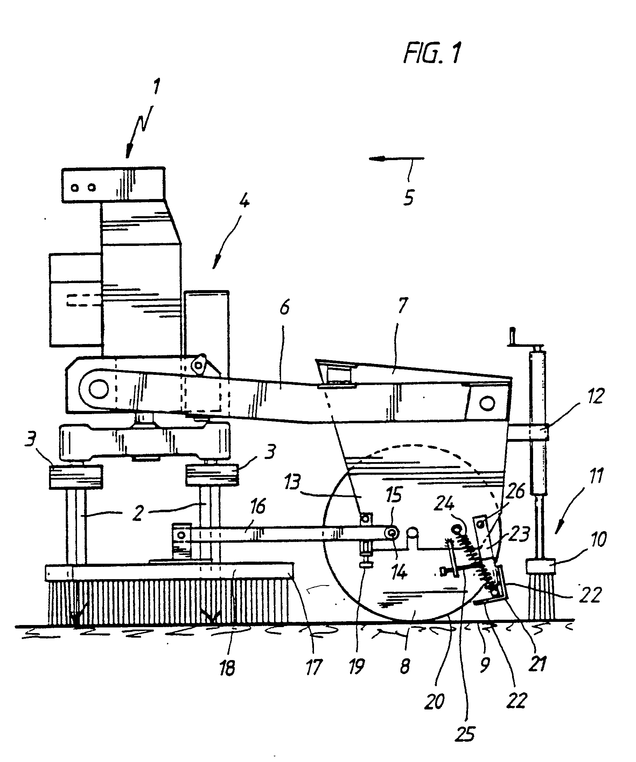

Fig. 1 ein Sportplatzpflegegerät in Prinzipdarstellung mit der in erfindungsgemäßer Weise ausgerüsteten Walze in der Seitenansicht,

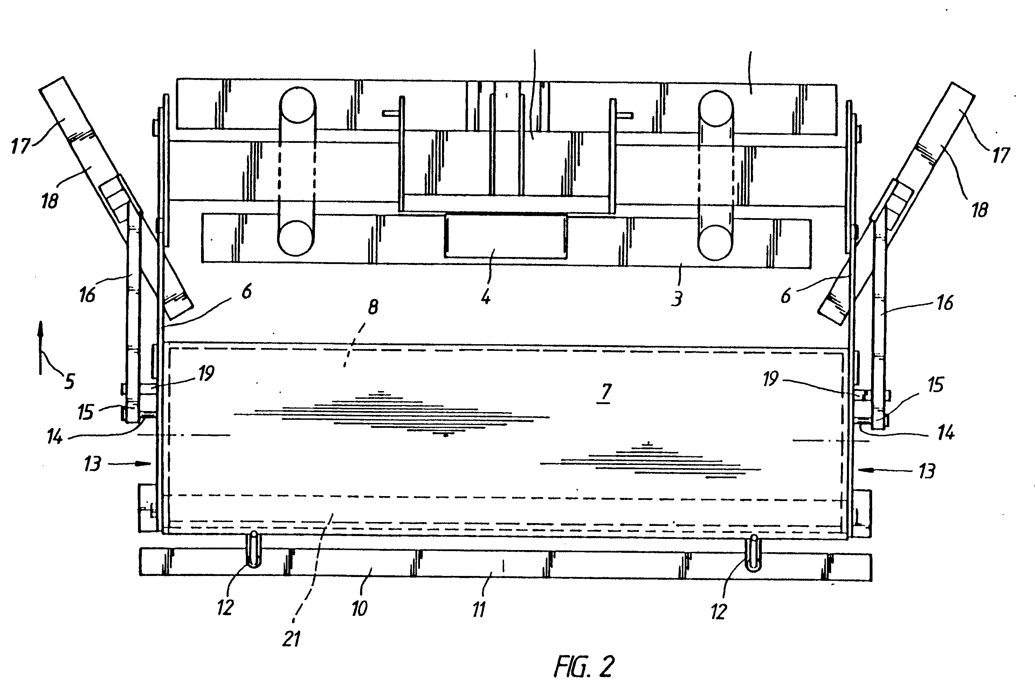

Fig. 2 das Sportplatzpflegegerät gemäß Fig. 1 in der Draufsicht,

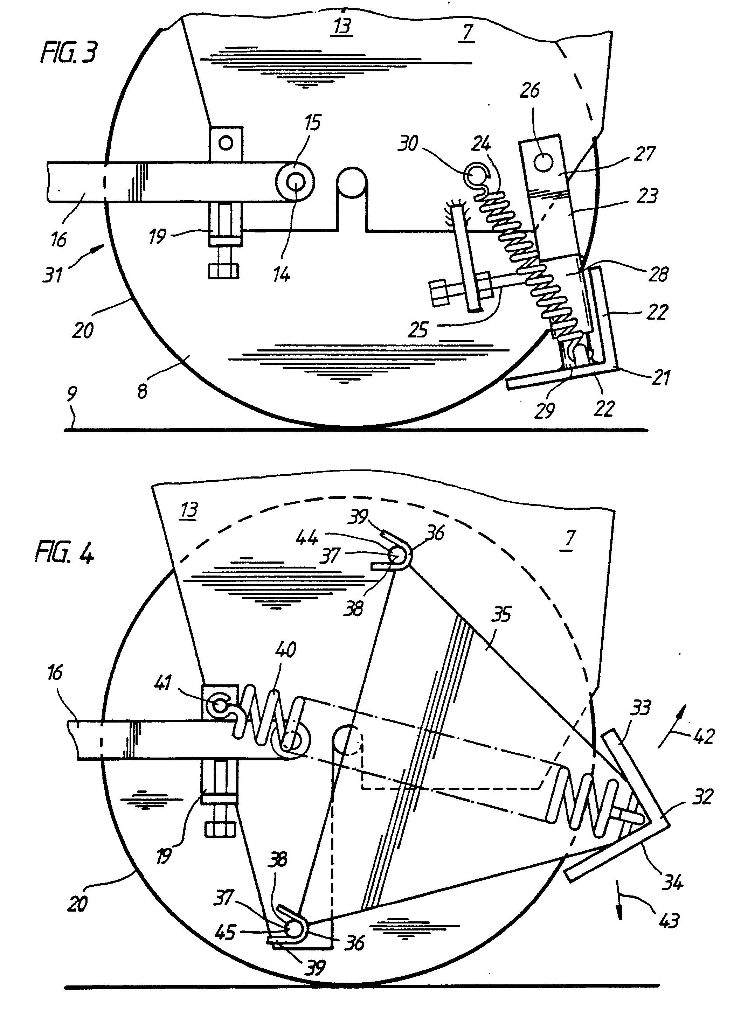

Fig. 3 die Bodenwalze gemäß Fig. 1 in Teilansicht und vergrößertem Maßstab und

Fig. 4 eine andere Ausführungsform der erfindungsgemäßen Bodenwalze in Teilansicht und vergrößertem Maßstab.

Das Sportplatzpflegegerät besteht aus der Rüttelegge 1, die zwei hintereinander angeordnete, mit Zinken 2 besetzte Eggenbalken 3 aufweist. Die Eggenbalken 3 werden über den Antriebsmechanismus 4 in hin- und hergehende Bewegungen quer zur Fahrtrichtung 5 versetzt. Über die Haltearme 6 ist die hinter der Rüttelegge 1 angeordnete, drehbar in dem Tragrahmen 7 gelagerte Nachlaufwalze 8 mit der Rüttelegge 1 verbunden. Mittels dieser, auf der Bodenoberfläche 9 abrollenden Nachlaufwalze 8 wird die jeweilige Eindringtiefe der Zinken 2 der Rüttelegge 1 in den Boden millimetergenau eingestellt. Hinter der Nachlaufwalze 8 ist die als Besen 10 höhenverstellbar ausgebildete Striegeleinrichtung 11 angelenkt und über die Halterung 12 mit dem Tragrahmen 7 der Nachlaufwalze 8 verbunden. Der Tragrahmen 7 weist die beiden seitlichen Halterungen 13 auf, die jeweils mit einem Zapfen 14 ausgerüstet sind. An diesem Zapfen 14 ist jeweils die in Fahrtrichtung 5 nach vorn ragende, das Gelenk 15 aufweisende Halterung 16 angelenkt, an die jeweils der als Grenzbesen 17 ausgebildete Grenzstriegel 18 befestigt ist.

Die an den seitlichen Halterungen 13 der Nachlaufwalze 8 angeordneten einstellbaren Anschlaghalterungen 19 begrenzen die Bewegung der die Grenzbesen 17 aufnehmenden Halterungen 16 nach unten. Dadurch, daß die Anschlaghalterungen 19 als einstellbare Bauteile ausgebildet sind, ist es möglich, die Abnutzung der Grenzbesen 17 auszugleichen, so daß die Grenzbesen 17 immer exakt mit der Bodenoberfläche 9 zusammenwirken.

Befindet sich das Sportplatzpflegegerät jetzt im Einsatz, haben die schräg zur Fahrtrichtung 5 angestellten Grenzbesen 17, wobei sich ein in Fahrtrichtung 5 gesehen nach vorn öffender Winkel zwischen den Eggenbalken 3 und dem jeweiligen Grenzstriegel 18 ergibt, die Aufgabe, die evtl. von den Zinken 2 nach außen bewegten und zu kleinen Erdwällen angehäuften Bodenteile in einfacher Weise einzuebnen, so daß eine ebene Bodenoberfläche 9 des aufgelockerten Tennenplatzes entsteht. Mittels dieser Grenzbesen 17 wird gewährleistet, daß die nebeneinanderliegenden Arbeitsbereiche des Sportplatzpflegegerätes nicht erkennbar sind und sich eine ebene Oberfläche 9 über den gesamten, aufgelockerten Tennenplatz ergibt.

Mittels der Nachlaufwalze 8 wird die aufgelockerte Bodenoberfläche leicht wieder angedrückt. Damit sich an dem Walzenumfang 20 der Nachlaufwalze 8 keine Verunreinigungen ansetzen, befindet sich auf der Rückseite der Nachlaufwalze 8 der sich über ihre ganze Länge erstreckende Schaber 21, der die zwei V-förmig angeordneten Stirnkanten 22 aufweist. Der Schaber 21 ist schwenkbar an dem Rahmen 7 über den Haltearm 23 angelenkt, wobei der Schaber 21 über die Zugfeder 24 in Richtung auf die Walze 8 belastet wird. Hierbei werden die schwenkbar an dem Rahmen 7 der Walze 8 angelenkten Haltearme 23 des Schabers 21 gegen den am Rahmen 7 angeordneten, einstellbaren Anschlaghalter 25 gezogen.

Der an dem Rahmen 7 schwenkbar über das Gelenk 26 befestigte Teil des Haltearmes 23 ist als Flachstab 27 ausgebildet, an dessen dem Gelenk 26 abgewandten Ende die rohrförmige Hülse 28 befestigt ist, in die der an dem Schaber 21 angeschweißte Bolzen 29 verschiebbar geführt ist. Die Zugfeder 24 ist einerseits an dem Schaber 21 bzw. an dessen Bolzen 29 angelenkt und andererseits an der an dem Rahmen 7 angeordneten Befestigungshalterung 30 befestigt. Die Befestigungshalterung 30 der Zugfeder 24 befindet sich zwischen dem Gelenk 26 des Haltearmes 23 und der Vorderseite 31 der Walze 8. Mit Hilfe des einstellbar ausgebildeten Anschlaghalters 25 läßt sich der Abstand zwischen dem Schaber 21 und der Walzenoberfläche 20 genau einstellen.

Trifft nun der Schaber 21 auf einen harten Klumpen, können sich die Bauteile 28 und 29 der Haltearme 23 entgegen der Federkraft der Zugfeder 24 in Längsrichtung verschieben, wodurch ein Festklemmen von Gegenständen zwischen dem Schaber 21 und der Walzenlauffläche 20 der Nachlaufwalze 8 verhindert wird. Diese erfindungsgemäße Befestigung des Schabers 21 an dem Rahmen 7 der Nachlaufwalze 8 erlaubt ein Ausweichen des Schabers 21 unabhängig von der jeweiligen Drehrichtung der Bodenwalze 8.

Die Fig. 4 zeigt eine andere Anlenkung des vom Walzenkörper 20 ausweichbaren, als Reinigungselement ausgebildeten Schabers 32. Der Schaber 32 erstreckt sich ebenfalls auf der Rückseite der Walze 8 über ihre ganze Länge und weist die zwei V-förmig angeordneten Stirnkanten 33 und 34 auf. Der Haltearm 35 des Schabers 32 weist auf seiner dem Schaber 32 abgewandten Seite zwei in in einem Abstand zueinander angeordnete Stützlager 36 auf, die mit den beiden am Rahmen 7 der Walze 8 angeordneten Gegenstützlager 37 zusammenwirken. Die Gegenstützlager 37 sind hierbei als Bolzen 38 ausgebildet, während die Stützlager 36 als offene U-förmige Fangtaschen 39 ausgebildet sind. Der Schaber 32 und die Stützlager 36 bilden ein gleichschenkliges Dreieck. Zwischen dem Haltearm 35 bzw. dem Schaber 32 einerseits und dem Rahmen 7 andererseits ist die Zugfeder 40 angelenkt. Die Befestigungshalterung 41 für die Zugfeder 40 am Rahmen 7 der Walze 8 befindet sich in dem Bereich zwischen den beiden Stütz- und Gegenstützlagern 36 und 37.

Dadurch, daß die Stützlager 36 des Haltearmes 35 von der Zugfeder 40 gegen die Gegenstützlager 37 gezogen wird, dienen diese Gegenstützlager 37 als Drehpunkte, um die der Schaber 32 verschwenkt werden kann. Wird nun ein harter Kluten zwischen Walzenoberfläche 20 und Schaber 32 eingeklemmt, kann der Schaber 32 je nach Drehrichtung der Walze 8 entweder in Pfeilrichtung 42 und 43 schwenken und somit von der Walzenoberfläche 20 abheben. Wird der Schaber 32 in Richtung des Pfeiles 42 verschwenkt, dient das Gegenstützlager 44 als Drehpunkt bzw. beim Verschwenken des Schabers 32 in Pfeilrichtung 43 wird das Gegenstützlager 45 zum Drehpunkt, um die die Halterung 35 verschwenkt wird.

**Ansprüche**

1. Bodenwalze, welche in einem Rahmen drehbar gelagert ist und auf ihrer einen Seite, vorzugsweise auf ihrer Rückseite einen sich über ihre ganze Länge erstreckenden Schaber mit zwei V-förmig angeordneten Stirnkanten aufweist, welcher über Zugfedern in Richtung auf die Walze belastet ist, wobei der Schaber über schwenkbar an dem Rahmen angelenkte Haltearme an dem Rahmen angeordnet ist und die Haltearme über die Feder gegen die an dem Rahmen angeordneten Anschlaghalter gezogen werden, dadurch gekennzeichnet, daß die Haltearme (23, 27, 28, 29) des Schabers (21) jeweils aus zwei in ihrer Längsrichtung zueinander verschiebbaren Teilen (28, 29) besteht, wobei der eine Teil des Haltearmes (23) als Bolzen (29) und der andere Teil zumindest teilweise als Hülse (28) ausgebildet ist, in die der Bolzen (29) eingreift.

2. Bodenwalze nach Anspruch 1, dadurch gekennzeichnet, daß die Feder (24) zwischen dem Rahmen (7, 13) und dem Schaber (21) angeordnet ist.

3. Bodenwalze, nach Anspruch 1, dadurch gekennzeichnet, daß die Feder (24) zwischen dem Rahmen (7, 13) und dem an dem Schaber (21) angeordneten Teil der Haltearme angeordnet ist.

4. Bodenwalze, nach Anspruch 1, dadurch gekennzeichnet, daß der an dem Rahmen (7, 13) schwenkbar über ein Gelenk (26) befestigte Teil des Haltearmes (23) ein Flachstab (27) ist, an dessen dem Gelenk (26) abgewandten Ende eine rohrförmige Hülse (28) angeordnet ist, daß der an dem Schaber (21) angeordnete Teil des Haltearmes (23) ein Bolzen (29) ist, der in der rohrförmigen Hülse (28) verschiebbar geführt ist, daß die Feder (24) einerseits an dem Schaber (21) und/oder dem Bolzen (29) angeordnet ist und andererseits an einer an dem Rahmen (7, 13) angeordneten Befestigungshalterung (30) befestigt ist, wobei diese Befestigungshalterung (30) zwischen dem Gelenk (26) des Haltearmes (23) und der Vorderseite (31) der Walze (8) angeordnet ist.

5. Bodenwalze, nach Anspruch 4, dadurch gekennzeichnet, daß die Befestigungshalterung (30) für die Feder (24) an dem Rahmen (7, 13) zwischen dem Gelenk des Haltearmes und der Drehachse der Walze (8) angeordnet ist.

6. Bodenwalze, welche in einem Rahmen drehbar gelagert ist und auf ihrer einen Seite, vorzugsweise auf ihrer Rückseite einen sich über ihre ganze Länge erstreckenden Schaber mit zwei V-förmig angeordneten Stirnkanten aufweist, welcher über Zugfedern in Richtung auf die Walze belastet ist, wobei der Schaber über schwenkbar an dem Rahmen angelenkte Haltearme an dem Rahmen angeordnet ist und die Haltearme über die Feder gegen die an dem Rahmen angeordnete Anschlaghalter gezogen werden, dadurch gekennzeichnet, daß der Haltearm (35) des Schabers (32) auf seiner dem Schaber (32) abgewandten Seite zwei in einem Abstand zueinander angeordnete Stützlager (36) aufweist, daß an dem Rahmen (7, 13) der Walze (8) zwei Gegenstützlager (37) angeordnet sind, auf die sich die Stützlager (36) des jeweiligen Haltearmes (35) des Schabers (32) abstützen, daß zwischen dem Haltearm (35) und-/oder dem Schaber (32) einerseits und dem Rahmen (7,13) andererseits die Feder (40) angeordnet ist, wobei die Befestigungshalterung (41) der Feder (40) an dem Rahmen (7,13) sich in dem Bereich zwischen den Stütz-beiden und Gegenstützlagern (36,37) befindet.

7. Bodenwalze, nach Anspruch 6, dadurch gekennzeichnet, daß der Schaber (32) und die Stützlager (36) ein Dreieck, vorzugsweise ein gleichschenkliges Dreieck bilden.

8. Bodenwalze, nach Anspruch 6, dadurch gekennzeichnet, daß die Gegenstützlager (37) als Bolzen (38) ausgebildet sind, während die Stützlager (36) als offene U-förmige Fangtaschen (39) ausgebildet sind.

9. Bodenwalze, nach Anspruch 6, dadurch gekennzeichnet, daß die Stützlager (36) als an dem Rahmen (7, 13) angeordnete Bolzen und die beiden Gegenstützlager an den Haltearmen jeweils als U-förmige Fangtaschen ausgebildet sind.

**Revendications**

1. Rouleau de sol monté à rotation sur un châssis et comportant d'un côté, de préférence sur son côté arrière, un racleur ayant deux arêtes frontales en forme de V, ce racleur s'étendant sur toute la longueur du rouleau en étant chargé en direction du rouleau par des ressorts de traction, le racleur étant relié au châssis par des bras de support articulés de manière pivotante sur le châssis et ces bras de support étant tirés par des ressorts contre des supports de butée prévus sur le châssis, rouleau caractérisé en ce que les bras de support (23, 27, 28, 29) du racleur (21) se composent chacun de deux parties (28, 29) coulissantes l'une par rapport à l'autre dans leur direction longitudinale, une partie du bras de support (23) étant en forme de goujon (29) et l'autre partie étant au moins partiellement réalisée en forme de douille (28) recevant le goujon (29).

2. Rouleau de sol selon la revendication 1, caractérisé en ce que le ressort (24) est prévu entre le châssis (7, 13) et le racleur (21).

3. Rouleau de sol selon la revendication 1, caractérisé en ce que le ressort (24) est prévu entre le châssis (7, 13) et la partie du bras de support du racleur (21).

4. Rouleau de sol selon la revendication 1, caractérisé en ce que la partie du bras de support (23) fixée au châssis (7, 13) de manière pivotante par une articulation (26) est un fer plat (27) dont l'extrémité opposée à l'articulation (26) est munie d'une douille tubulaire (28) qui reçoit un goujon (29) prévu sur la partie de bras de support (23) du racleur (21), ce goujon étant coulissant dans la douille tubulaire (28) et le ressort (24) est relié, d'une part, au racleur (21) et/ou au goujon (29) et, d'autre part, à un support de fixation (30) prévu sur le châssis (7, 13), ce support de fixation (30) étant prévu entre l'articulation (26) du bras de support (23) et la face avant (31) du rouleau (8).

5. Rouleau de sol selon la revendication 4, caractérisé en ce que le support de fixation (30) du ressort (24) est prévu sur le châssis (7, 13) entre l'articulation du bras de support et l'axe de rotation du rouleau (8).

6. Rouleau de sol qui est monté à rotation dans un châssis et comporte d'un côté, de préférence sur son côté arrière, un racleur s'étendant sur toute sa longueur et ayant deux arêtes frontales en forme de V, ce racleur étant chargé contre le rouleau par des ressorts de traction, le racleur étant monté de manière pivotante sur le châssis par des bras de support reliés au châssis et ces bras de support étant tirés par des ressorts contre des supports de butée prévus sur le châssis, rouleau caractérisé en ce que le bras de support (35) du racleur (32) comporte, sur son côté opposé au racleur (32), deux paliers d'appui (36) prévus à une certaine distance l'un de l'autre et deux paliers de contre-appui (37) sont prévus sur le châssis (7, 13) du rouleau (8), paliers de contre-appui contre lesquels viennent s'appuyer les paliers d'appui (36) du bras de support (35) respectif du racleur (32) et en ce qu'entre le bras de support (35) et/ou le racleur (32), d'une part, et le châssis (7, 13), d'autre part, il y a un ressort (40), le support de fixation (41) du ressort (40) se trouvant sur le châssis (7, 13) dans la zone comprise entre les deux paliers d'appui et de contre-appui (36, 37).

7. Rouleau de sol selon la revendication 6, caractérisé en ce que le racleur (32) et le palier d'appui (36) forment un triangle, de préférence un triangle isocèle

8. Rouleau de sol selon la revendication 6, caractérisé en ce que les paliers de contre-appui (37) sont réalisés en forme de goujons (38) et les paliers d'appui (36) sont réalisés en forme de logements (38) en U ouvert.

9. Rouleau de sol selon la revendication 6, caractérisé en ce que les paliers d'appui (36) sont des goujons prévus sur le châssis (7, 13) et les deux paliers de contre-appui sont des logements en forme de U prévus respectivement sur les bras de support.

## Claims

1. Ground roller, which is rotatably mounted in a frame and is provided, at one of its sides, preferably at its rear side, with a scraper which extends over its entire length and has two leading edges disposed in a V-shaped configuration, the scraper being loaded in a direction towards the roller via the intermediary of tension springs, and the scraper being disposed on the frame via the intermediary of retaining arms, which are pivotably mounted on the frame, and the retaining arms are drawn, by the spring, towards stop members disposed on the frame, characterised in that the retaining arms (23, 27, 28, 29) of the scraper (21) are each formed from two component parts (28, 29), which are displaceable relative to each other in respect of their longitudinal direction, one component part of the retaining arm (23) being in the form of a pin (29), and the other component part being at least partially in the form of a sleeve (28), in which the pin (29) engages.

2. Ground roller according to claim 1, characterised in that the spring (24) is disposed between the frame (7, 13) and the scraper (21).

3. Ground roller according to claim 1, characterised in that the spring (24) is disposed between the frame (7, 13) and the component part of the retaining arms which is disposed on the scraper (21).

4. Ground roller according to claim 1, characterised in that the component part of the retaining arm (23), which is pivotally mounted on the frame (7, 13) via the intermediary of a pivot joint (26), is a flat bar (27), a tubular sleeve (28) being disposed at the end of said flat bar remote from the pivot joint (26), in that the component port of the retaining arm (23) disposed on the scraper (21) is a pin (29), which is displaceably guided in the tubular sleeve (28), in that the spring (24) has one end disposed on the scraper (21) and/or on the pin (29) and the other end mounted on an attachment holder (30), which is disposed on the frame (7, 13), this attachment holder (30) being disposed between the pivot joint (26) of the retaining arm (23) and the front end (31) of the roller (8).

5. Ground roller according to claim 4, characterised in that the attachment holder (30) for the spring (24) is disposed on the frame (7, 13) between the pivot joint of the retaining arm and the axis of rotation of the roller (8).

6. Ground roller, which is rotatably mounted in a frame and is provided, at one of its sides, preferably at its rear side, with a scraper which extends over its entire length and has two leading edges disposed in a V-shaped configuration, the scraper being loaded in a direction towards the roller via the intermediary of tension springs, and the scraper being disposed on the frame via the intermediary of retaining arms, which are pivotably mounted on the frame, and the retaining arm are drawn, by the spring, towards the stop members disposed on the frame, characterised in that the retaining arm (35) of the scraper (32) is provided, at its end remote from the scraper (32), with two supporting bearings (36), which are spaced apart from each other, in that the counter-supporting bearings (37) are disposed on the frame (7, 13) of the roller (8), the supporting bearings (36) of each retaining arm (35) of the scraper (32) being supported on said counter-supporting bearings, in that the spring (40) is disposed between the retaining arm (35) and/or the scraper (32) on the one hand and the frame (7, 13) on the other hand, the attachment holder (41) of the spring (40) being situated on the frame (7, 13) in the region between the two supporting bearings and counter supporting bearings (36, 37).

7. Ground roller according to claim 6, characterised in that the scraper (32) and the supporting bearings (36) form a triangle, preferably an isosceles triangle.

8. Ground roller according to claim 6, characterised in that the counter-supporting bearings (37) are in the form of pins (38), while the supporting bearings (36) are in the form of open, U-shaped receiving members (39).

9. Ground roller according to claim 6, characterised in that the supporting bearings (36) are in the form of pins, which are disposed on the frame (7, 13), and the two counter-supporting bearings on the retaining are are each in the form of U-shaped receiving members.

FIG. 1

FIG. 2

EP 0 295 510 B1

FIG. 3

FIG. 4